# EUROPÄISCHE PATENTSCHRIFT

(11) **EP 1 106 982 B1**
(45) Veröffentlichungstag und Bekanntmachung des Hinweises auf die Patenterteilung: **09.02.2005**
(21) Anmeldenummer: 99124600.0
(22) Anmeldetag: 10.12.1999
(51) Int. Cl.: G01L 9/00, G01L 19/06

(54) **Druckmessgerät**
Pressure measuring device
Capteur de pression

(43) Veröffentlichungstag der Anmeldung: 13.06.2001
(73) Patentinhaber: Endress + Hauser GmbH + Co. KG., 79689 Maulburg (DE)
(72) Erfinder: Flögel, Karl, D-79650 Schopheim (DE); Uehlin, Thomas, D-79650 Schopfheim (DE); Hegner, Frank, D-79540 Lörrach (DE); Banholzer, Karlheinz, D-79688 Hausen (DE)
(74) Vertreter: Andres, Angelika

(56) Entgegenhaltungen:
- EP-A- 0 780 674
- WO-A-99/34185
- US-A- 4 864 463
- US-A- 5 756 899

## Beschreibung

Die Erfindung betrifft ein Druckmeßgerät.

In der Druckmeßtechnik wird zwischen Differenz-, Absolut- und Relativdruckmeßgeräten unterschieden. Differenzdruckmeßgeräte dienen der Messung der Differenz zwischen zwei verschiedenen Drücken. Bei Absolutdruckmeßgeräten wird ein zu messender Druck absolut, d.h. als Druckunterschied gegenüber einem Vakuum erfaßt. Mit einem Relativdruckmeßgerät wird ein zu messender Druck in Form eines Druckunterschiedes gegenüber einem Referenzdruck aufgenommen. Der Referenzdruck ist ein Umgebungsdruck am Meßort. Bei den meisten Anwendungen ist dies der Atmosphärendruck am Einsatzort.

Druckmeßgeräte weisen üblicherweise ein Gehäuse, eine in dem Gehäuse eingefaßte Druckmeßzelle zur Druckerfassung und eine elektronische Schaltung auf. Die Druckmeßzellen weisen mindestens eine druckempfindliche Membran auf, auf deren Außenseite im Betrieb ein Druck einwirkt. Es sind z.B. nichtmetallische Druckmeßzellen auf dem Markt, bei denen der Druck direkt auf eine Meßmembran einwirkt. Die Meßmembranen bestehen in der Regel aus Isolatoren wie z.B. Glas, Keramik oder Saphir, so daß ein elektromechanischer Wandler direkt auf der Meßmembran angeordnet sein kann. Der elektromechanische Wandler wandelt die mechanische Auslenkung der Meßmembran in eine elektrische Größe um, die dann der Elektronik für eine weitere Auswertung und/oder Verarbeitung zur Verfügung steht.

Meßgeräte werden in einem industriellen Umfeld üblicherweise erdfrei über ein handelsübliches Meßumformerspeisegerät versorgt und ein Ausgangssignal wird z.B. über eine entfernt von dem Meßgerät angeordnete Bürde abgenommen. Versorgungs- und/oder Signalleitungen können eine erhebliche Länge aufweisen, so daß die Gefahr einer Einkopplung von elektromagnetischen Störungen besteht. Besonders kritisch ist die Einkopplung von sogenannten Gleichtaktstörungen, bei denen elektromagnetische Störungen gleichzeitig auf die Anschlußleitungen des Meßgeräts gegen ein gemeinsames Bezugssystem, z.B. Erde, einwirken. In Folge solcher Gleichtaktstörungen fließen Gleichtaktstörströme über die Anschlußleitungen des Meßgeräts, dessen elektronische Schaltung und dessen Gehäuse an das Bezugssystem.

Bei Druckmeßgeräten besteht hierbei zusätzlich die Gefahr, daß Störströme über die Druckmeßzelle fließen und sich diese Störströme den unverstärkten und/oder unaufbereiteten Meßgrößen und/oder Meßsignalen überlagern. Dies kann zu erheblichen Meßfehlern führen.

In dem Artikel 'Der Einfluß von Gleichtaktstörungen auf industriell eingesetzte Sensoren und Meßsysteme' von H. Waldschmidt, der in dem vom VDI Verlag GmbH 1996 herausgegebenen Tagungsband 'Sensoren und Messysteme' zu der in Bad Nauheim vom 11. bis 13. März 1996 abgehaltenen Tagung veröffentlicht wurde, ist ein Druckmeßgerät beschrieben, welches umfaßt:
- ein Gehäuse
- eine Druckmeßzelle
   -- die mindestens eine druckempfindliche Meßmembran aufweist,
      --- auf deren Außenseite im Betrieb ein Druck einwirkt und
   -- die einen Wandler zur Umwandlung einer druckabhängigen Auslenkung der Meßmembran in eine elektrische Meßgröße aufweist, und
- eine elektronische Schaltung zur Umwandlung der elektrischen Meßgröße in ein Meßsignal.

Die Druckmeßzelle ist, wie auf Seite 523 unten beschrieben und in Bild 4 dargestellt in ein Gehäuse eingefaßt und ist im Gehäuse seitlich von einer Abschirmung aus einer beidseitig isolierten Kupferfolie umgeben. Die Abschirmung bildet quasi ein Gehäuse im Gehäuse und ist mit einem Referenzpotential, z.B. mit einem Eingang des Druckmeßgeräts, verbunden. Ein von außerhalb des Gehäuses eingekoppeltes Störsignal fließt somit im wesentlichen über die Abschirmung an das Bezugspotential und die Druckmeßzelle bleibt weitgehend störfrei.

Ein ebensolches Druckmeßgerät ist auch in der EP-A 780 674 beschrieben.

Zwischen der Druckmeßzelle und der Abschirmung und zwischen der Druckmeßzelle und dem Gehäuse bestehen jedoch kapazitive Verbindungen, deren Kapazitäten üblicherweise als Streukapazitäten bezeichnet werden. Die Größe der Streukapazitäten hängt von der räumlichen Anordnung von der Druckmeßzelle, der Abschirmung und des Gehäuses zueinander und von der Dielektrizitätskonstanten eines zwischen den genannten Bauteilen befindlichen Mediums ab. Üblicherweise befindet sich dort Luft, deren Dielektrizitätskonstante von deren momentanten Feuchtigkeit abhängt. Es fließen daher zwar von außen eingekoppelte Störungen im wesentlichen über die Abschirmung ab, es fließt jedoch auch ein geringer von der Größe der Streukapazitäten abhängiger Störstrom über die Druckmeßzelle, wo er sich mit der störempfindlichen Meßgröße und/oder dem störempfindlichen Meßsignal überlagern kann. Die Meßgenauigkeit hängt daher unter anderem von der räumlichen Anordnung von Druckmeßzelle, Abschirmung und Gehäuse zueinander und von der momentanen Dielektrizitätskonstanten des Mediums ab. Insb. bei kapazitiven Druckmeßzellen, d.h. Druckmeßzellen bei denen eine sich druckabhängig ändernde Kapazität ausgemessen wird, können sich diese veränderlichen Streukapazitäten der zu messenden Kapazität überlagern und somit zu einer Veränderung des Meßsignals des Druckmeßgeräts führen.

Die Abschirmung stellt ein zusätzliches Bauteil dar, das hergestellt und montiert werden muß. Zudem ist eine dünne Kupferfolie mechanisch empfindlich und Formveränderungen wirken sich auf die Größe der Streukapazitäten aus.

Es ist eine Aufgabe der Erfindung, ein Druckmeßgerät mit einem Gehäuse und einer darin angeordneten Druckmeßzelle anzugeben, bei dem die Druckmeßzelle, insb. unabhängig von deren Einbaulage im Gehäuse, vor Störungen geschützt ist.

Hierzu besteht die Erfindung in einem Druckmeßgerät nach einem der Ansprüche 1 oder 6. Jedes der Druckmeßgeräte umfaßt:
- ein Gehäuse
- eine Druckmeßzelle
   -- die mindestens eine druckempfindliche Meßmembran aufweist,
      --- auf deren Außenseite im Betrieb ein Druck einwirkt,
   -- die einen Wandler zur Umwandlung einer druckabhängigen Auslenkung der Meßmembran in eine elektrische Meßgröße aufweist und
   -- die freie äußere Mantelflächen aufweist,
      --- die mit einer elektrisch leitfähigen Beschichtung versehen sind, und
- eine in dem Gehäuse angeordnete elektronische Schaltung zur Umwandlung der elektrischen Meßgröße in ein Meßsignal.

Gemäß einer Ausgestaltung ist die elektrisch leitfähige Beschichtung eine aufgesputterte metallische Beschichtung.

Gemäß einer Ausgestaltung ist die elektrisch leitfähige Beschichtung ein metallischer Lack, insb. ein Carbonleitlack oder ein Silberleitlack.

Gemäß einer Ausgestaltung ist die elektrisch leitfähige Beschichtung eine Schicht in einer Laminatfolie.

Gemäß der ersten Alternative der Erfindung ist die Druckmeßzelle eine kapazitive Druckmeßzelle mit einer auf der Meßmembran angeordneten Elektrode und die Beschichtung bildet zusammen mit der Elektrode einen geschlossenen Faraday-Käfig.

Gemäß einer Ausgestaltung ist die Elektrode über die Beschichtung mit einem Referenzpotential verbunden.

Gemäß der zweiten Alternative der Erfindung ist die Druckmeßzelle eine kapazitive Differenzdruck-Meßzelle, die zwei Meßmembranen mit darauf angeordneten Elektroden aufweist, und die Beschichtung bildet zusammen mit den Elektroden einen geschlossenen Faraday-Käfig.

Gemäß einer Ausgestaltung sind die Elektroden über die Beschichtung mit einem Referenzpotential verbunden.

Die Erfindung und deren Vorteile werden nun anhand der Figuren der Zeichnung, in denen zwei Ausführungsbeispiele dargestellt sind, näher erläutert. Gleiche Elemente sind in den Figuren mit den gleichen Bezugszeichen versehen.
- Fig. 1: zeigt einen Schnitt durch ein Relativdruckmeßgerät; und
- Fig. 2: zeigt einen Schnitt durch ein Differenzdruckmeßgerät.

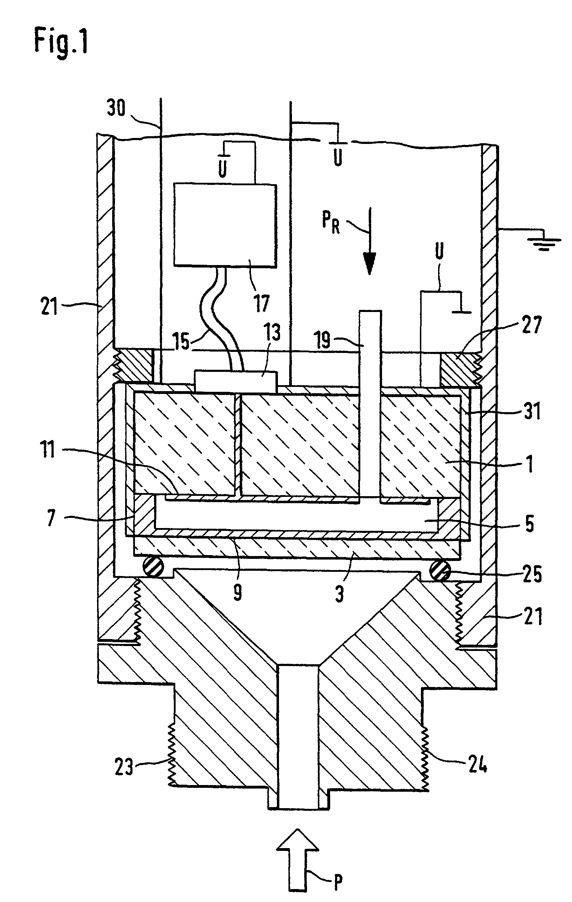

In Fig. 1 ist ein Schnitt durch ein erstes Ausführungsbeispiel eines Druckmeßgeräts dargestellt. Das Druckmeßgerät ist ein Relativdruckmeßgerät mit einer kapazitiven keramischen Druckmeßzelle.

Die Druckmeßzelle weist einen Grundkörper 1 und eine Meßmembran 3 auf. Der Grundkörper 1 besteht z.B. aus Keramik. Die Meßmembran 3 kann ebenfalls aus Keramik bestehen oder z.B. aus Glas oder aus Saphir sein. Die Meßmembran 3 und der Grundkörper 1 sind an deren Rand unter Bildung einer Meßkammer 5 mittels einer Fügestelle 7 druckdicht und gasdicht miteinander verbunden. Die Meßmembran 3 ist druckempfindlich, d.h. ein auf sie einwirkender Druck P bewirkt eine Auslenkung der Meßmembran 3 aus deren Ruhelage.

Die Druckmeßzelle weist einen Wandler zur Umwandlung der druckabhängigen Auslenkung der Meßmembran 3 in eine elektrische Meßgröße auf.

In dem dargestellten Ausführungsbeispiel einer kapazitiven Druckmeßzelle umfaßt der Wandler eine auf einer Innenseite der Meßmembran 3 angeordnete Elektrode 9 und mindestens eine auf einer gegenüberliegenden meßmembran-zugewandten Außenseite des Grundkörpers 1 angeordneten Gegenelektrode 11. Die Gegenelektrode 11 des Grundkörpers 1 ist durch den Grundkörper 1 hindurch zu dessen Außenseite hin elektrisch kontaktiert und führt zu einer auf dem Grundkörper 1 angeordneten elektronischen Schaltung 13. Elektrode 9 und Gegenelektrode 11 bilden einen Kondensator und die elektronische Schaltung 13 formt eine elektrische Meßgröße, hier die Kapazitätsänderungen des Kondensators, in ein elektrisches Meßsignal, z.B. in eine sich entsprechend ändernde elektrische Spannung, um. Die Meßgröße ist über Anschlußleitungen 15 einer weiteren elektronischen Einheit 17 zur weiteren Verarbeitung und/oder Auswertung zugeführt.

Im Betrieb wirkt auf eine Außenseite der Meßmembran 3 ein zu messender Druck P ein. Dies ist in Fig. 1 durch einen Pfeil symbolisch dargestellt. Der Druck P bewirkt eine druckabhängige Auslenkung der Meßmembran 3, die von dem Wandler in die elektrische Meßgröße umgewandelt wird.

Anstatt des beschriebenen kapazitiven Wandlers können auch andere kapazitive Wandlertypen eingesetzt werden.

Der Grundkörper 1 weist eine durchgehende Bohrung auf, in die ein Röhrchen 19 eingeführt ist. Über das Röhrchen 19 ist ein Referenzdruck P_{R}, auf den der zu messende Druck P bezogen ist, der Meßkammer 5 zugeführt. Dieser Referenzdruck P_{R} wirkt auf die Innenseite der Meßmembran 3 ein während auf deren Außenseite der zu messende Druck P einwirkt.

Der Relativdrucksensor weist ein Gehäuse 21 und einen damit verbundenen Prozeßanschluß 23 auf. Der Prozeßanschluß 23 dient dazu, den Relativdrucksensor an einem Einsatzort zu befestigen. In dem gezeigten Ausführungsbeispiel ist der Prozeßanschluß 23 in ein in prozeß-zugewandter Richtung im Inneren des Gehäuses 21 angeordnetes Innengewinde eingeschraubt. An einem von der Druckmeßzelle abgewandten Ende weist der Prozeßanschluß 23 ein Außengewinde 24 auf, mittels dessen das Druckmeßgerät dann an einem in Fig. 1 nicht dargestellten Meßort zu befestigen ist. Andere Arten der Befestigung, z.B. mittels einer Flanschverbindung, sind ebenfalls einsetzbar.

Der Prozeßanschluß 23 weist eine zentrale axiale durchgehende Bohrung auf, die sich vor der Meßmembran 3 zu einer Kammer aufweitet. Die Kammer ist durch die Meßmembran 3, den Prozeßanschluß 23 und eine zwischen einer äußeren druckunempfindlichen Ringfläche der Meßmembran 3 und einer äußeren der Meßmembran 3 zugewandten Ringfläche des Prozeßanschlusses 23 eingespannte Dichtung 25 begrenzt. Ein am Meßort herrschender Druck P wirkt über die Bohrung und die Kammer auf die Meßmembran 3 ein.

Auf einer meßmembran-abgewandten Seite der Meßzelle ist ein Gewindering 27 in das Gehäuse 21 eingeschraubt, durch den die Druckmeßzelle gegen die Dichtung 25 gepreßt ist. Der Prozeßanschluß 23 ist derart gegen den Drucksensor geschraubt, daß dadurch die Druckmeßzelle zwischen dem Gewindering 27 und dem Prozeßanschluß 23 unter Kompression der Dichtung 25 eingespannt ist. Die Dichtung 25 bewirkt dabei zum einen eine verspannungsfreie Einspannung der Druckmeßzelle und zum anderen eine prozeßseitige Abdichtung zwischen einem Innenraum des Gehäuses 21 und der Kammer.

Die Druckmeßzelle weist freie äußere Mantelflächen auf, die mit einer elektrisch leitfähigen Beschichtung 31 versehen sind.

Die elektrisch leitfähige Beschichtung 31 ist vorzugsweise eine aufgesputterte metallische Beschichtung. Beim Sputtern werden unter Hochvakkuum durch Beschuß eines auf ein negatives Potential geladenen Targets mit Ionen Atome aus dem Target herausgelöst, die sich dann auf einem Substrat, hier der Druckmeßzelle ablagern. Als Target eignet sich z.B. Gold, Silber oder Tantal. Gold und Silber bieten den Vorteil, daß eine Beschichtung 31 aus diesen Materialien durch Lötung kontaktierbar ist. Die Kontaktierung einer Beschichtung 31 aus Tantal kann z.B. über einen Leitkleber erfolgen. Das Aufsputtern der Beschichtung 31 bietet den Vorteil einer atomaren Haftung der Beschichtung 31. Es besteht keinerlei Spalt oder Undichtigkeit zwischen der Druckmeßzelle und der Beschichtung 31. Es sind damit insb. keine Kanäle vorhanden, in die Feuchtigkeit eindringen könnte. Weiter können in einem einzigen Sputterprozeß mehrere Druckmeßzellen gleichzeitig beschichtet werden.

Es bestehen aufgrund der Beschichtung 31 keine meßwertverfälschenden Streukapazitäten nach außen. Die Meßgenauigkeit des Drucksensors ist somit unabhängig von dessen Einbaulage im Gehäuse 21. Desweiteren besteht bei dem zuvor beschriebenen kapazitiven Drucksensor der Vorteil, daß der Nullpunkt des Sensors z.B. auch bei einer drastischen Änderung der Luftfeuchtigkeit in der Umgebung oder bei einer Änderung der Einbaulage der Druckmeßzelle innerhalb des Gehäuses 21 unverändert und langzeitstabil bleibt.

Alternativ zu der zuvor genannten aufgesputterten Beschichtung kann die elektrisch leitfähige Beschichtung 31 ein metallischer Lack, insb. ein Carbonleitlack oder ein Silberleitlack sein. Ein Carbonleitlack kann z.B. durch Walzen, Siebdruck oder Stempeldruck aufgebracht werden. Silberleitlack weist üblicher Weise eine geringere Viskosität als Carbonleitlack auf und kann daher auch aufgesprüht werden.

Auch kann die elektrisch leitfähige Beschichtung 31 als eine leitfähige Schicht in einer Laminatfolie ausgebildet sein. Die Laminatfolie ist dabei vorzugsweise ein Formteil, das zu dessen Fixierung auf der Druckmeßzelle mit einer selbstklebenden Folie versehen ist

In dem gezeigten Ausführungsbeispiel ist die Druckmeßzelle kreisscheibenförmig und die Beschichtung 31 ist auf deren zylindrischen äußeren Mantelfläche und auf einer meßmembran-abgewandten kreisscheibenförmigen äußeren Mantelfläche des Grundkörpers 1 angeordnet. Auf der letztgenannten Mantelfläche weist die Beschichtung 31 eine Ausnehmung für die Durchführung des Röhrchens 19 und für eine isolierte elektrische Durchkontaktierung der Gegenelektrode 11 zu der elektronischen Schaltung 13 auf.

Die Elektrode 9 der Druckmeßzelle erstreckt sich bis an einen äußeren Rand der Druckmeßzelle und steht entweder direkt oder über die Fügestelle 7 in elektrisch leitender Verbindung zu der Beschichtung 31. Die Beschichtung 31 bietet hier den Vorteil, daß sie gleichzeitig als Schutz der Druckmeßzelle vor Störströmen und als elektrische Kontaktierung der Elektrode 9 dient.

Die Beschichtung 31 bildet zusammen mit der Elektrode 9 einen geschlossenen Faraday-Käfig, in dem die Druckmeßzelle eingeschlossen ist.

Die Beschichtung 31 ist an einer gut zugänglichen Stelle, in dem gezeigten Ausführungsbeispiel ist dies auf der meßmembran-abgewandten Seite des Grundkörpers 1, mit einem, in Fig. 1 durch ein Potential-Schaltungssymbol dargestellten, Referenzpotential U verbunden. Als Referenzpotential U eignet sich, wie in Fig. 1 dargestellt, ein der elektronischen Schaltung 13 und der weiteren Schaltung 17 gemeinsames Schaltungsnull. Genauso kann die Beschichtung 31 aber auch mit einer an dem Druckmeßgerät anliegenden Eingangsspannung verbunden sein. In beiden Fällen ist gewährleistet, daß Störströme auf der Außenseite des Faraday-Käfigs an das Bezugssystem abfließen und sich somit nicht der elektrischen Meßgröße und/oder den unverstärkten Meßsignalen im Inneren der Druckmeßzelle überlagern können.
Das Gehäuse 21 ist in dem gezeigten Ausführungsbeispiel geerdet. Dies ist aus sicherheitstechnischen Gründen immer erforderlich, wenn das Gehäuse 21 aus Metall besteht. Damit über die Einspannung der Druckmeßzelle keine elektrisch leitende Verbindung zwischen dem geerdeten Gehäuse 21 und der mit dem Referenzpotential U verbundenen Beschichtung 31 besteht, ist entweder die Beschichtung 31 außen mit einer Isolation, z.B. einer Kunststoffschicht oder einem Lack, versehen, oder die Einspannung der Druckmeßzelle erfolgt mittels Isolatoren. So können z.B. in dem in Fig. 1 dargestellten Ausführungsbeispiel die Dichtung 25 und der Gewindering 27 aus Isolatoren bestehen.

Die direkte Aufbringung der Beschichtung 31 ist sehr kostengünstig herstellbar und es ist kein zusätzliches Bauteil für die Gewährleistung eines zuverlässigen Schutzes vor Störströmen erforderlich. Der Platzbedarf der Beschichtung 31 ist vernachlässigbar und es ist keine Befestigung oder Halterung für die Beschichtung 31 erfoderlich.

Da die Beschichtung 31 mit der Druckmeßzelle mechanisch fest verbunden ist, liegen immer die gleichen elektrischen Bedingungen innerhalb der Druckmeßzelle vor. Zwischen der Druckmeßzelle und der Beschichtung besteht keinerlei Spalt oder Abstand. Damit ist erreicht, daß zwischen dem Inneraum des durch die Beschichtung 31 gebildeten Faraday-Käfigs und der äußeren Umgebung der Druckmeßzelle keine kapazitive meßwertverfälschende Verbindung mehr besteht. Die Meßgenauigkeit der Druckmeßzelle ist somit unabhängig vom Einbau und von der Lage der Druckmeßzelle im Gehäuse 21 ist. Gleichzeitig bietet die Beschichtung 31 Schutz vor von außen in die Druckmeßzelle eindringenden elektromagnetischen Störungen. Dieser Schutz ist dort optimal, wo die Meßgröße und die Meßsignale am empfindlichsten gegenüber Störsignalen sind, nämlich direkt in der Druckmeßzelle.

Auf völlig analoge Weise kann auch ein erfindungsgemäßes Absolutdruckmeßgerät aufgebaut sein. Der einzige Unterschied zu dem zuvor beschriebenen Relativdruckmeßgerät besteht darin, daß das Röhrchen 19 zur Zufuhr des Referenzdruck P_{R} entfällt und die Meßkammer 5 evakuuiert ist.

Zum Schutz der elektronischen Schaltungen 13, 17 vor von außen eindringenden elektromagnetischen Störungen kann zusätzlich eine beidseitig isolierte, in Fig. 1 lediglich schematisch eingezeichnete, metallische Abschirmung 30 vorgesehen sein, wie sie in dem eingangs angeführten Stand der Technik beschrieben ist. Die metallische Abschirmung 30 ist kapazitiv oder galvanisch mit dem gleichen Referenzpotential U verbunden, wie die Beschichtung. Vorzugweise bilden die Abschirmung 30 und die Beschichtung 31 eine geschlossene Mantelfläche über die von außen eingekoppelte elektromagnetische Störungen abfließen können.

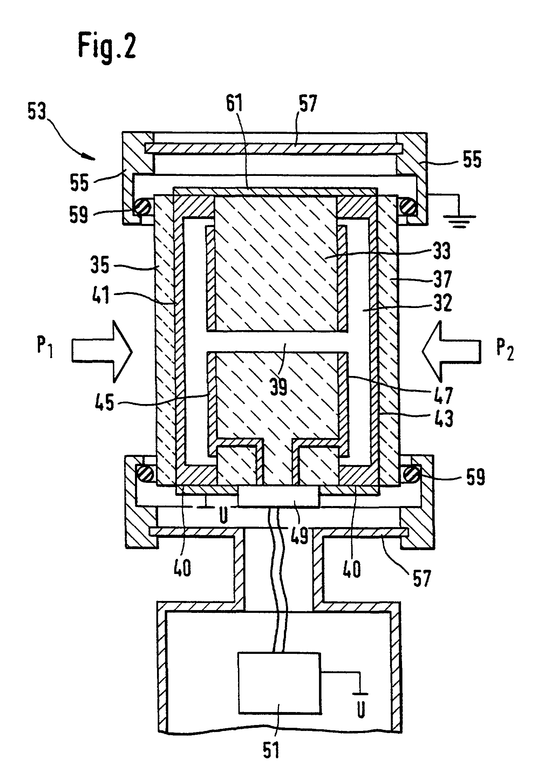

Fig. 2 zeigt ein weiteres Ausführungsbeispiel eines erfindungsgemäßen Druckmeßgeräts, nämlich eines Differenzdruckmeßgeräts. Als Druckmeßzelle ist hier eine kapazitive, zylindrische Differenzdruck-Meßzelle mit'einer flüssigkeitsgefüllten Meßkammer 32 eingesetzt. Sie besteht aus einem zylindrischen Grundkörper 33, an dessen einer Stirnseite eine erste Meßmembran 35 und an dessen zweiter Stirnseite eine zweite Meßmembran 37 jeweils unter Bildung eines Hohlraums angebracht ist. Die Meßkammer 32 weist eine Kapillarleitung 39 auf, die die beiden Hohlräume miteinander verbindet. Die Meßmembranen 35, 37 und der Grundkörper 33 bestehen auch hier z.B. aus Keramik und sind an deren Rand unter Bildung einer Meßkammer mittels einer Fügestelle 40 druckdicht und gasdicht miteinander verbunden. Auf den Innenflächen der Meßmembranen 35, 37 sind Elektroden 41, 43 und auf den gegenüberliegenden Außenflächen des Grundkörpers 33 sind Gegenelektroden 45, 47 angeordnet. Je eine Elektrode 41, 43 und eine gegenüberliegende Gegenelektrode 45, 47 bilden jeweils einen Meßkondensator dessen Kapazität von der Durchbiegung der jeweiligen Meßmembran 35, 37 abhängt. Die Gegenelektroden 45, 47 sind über durch den Grundkörper 33 hindurchgeführte Anschlüsse mit einer auf einer zylindrischen Mantelfläche des Grundkörper 33 angeordneten elektronischen Schaltung 49 verbunden. Solche Differenzdruck-Meßzellen werden auch als kapazitive Einkammer-Differenzdruck-Meßzellen bezeichnet.

An der ersten Meßmembran 35 liegt ein Druck P₁ und an der zweiten Meßmembran 37 liegt ein Druck P₂ an.
Ist beispielsweise der erste Druck P₁ größer als der zweite Druck P₂, so wird die erste Membran 35 in Richtung des Grundkörpers 33 ausgelenkt, der Abstand zwischen der Elektroden 41 und der Gegenelektrode 45 verringert sich und die Kapazität dieses Meßkondensators steigt. Entsprechend wird die zweite Meßmembran 37 nach außen ausgelenkt, der Abstand zwischen der Elektrode 43 und der Gegenelektrode 47 vergrößert sich und die Kapazität dieses Meßkondensators sinkt. In der elektronischen Schaltung 49 wird die Differenz der Kehrwerte der beiden Kapazitäten bestimmt und dieser Differenz ein Differenzdruck, d.h. eine Differenz zwischen dem ersten und dem zweiten Druck P₁, P₂ zugeordnet. Die elektronische Schaltung 49 gibt ein entsprechendes Meßsignal ab, das dem Differenzdruck entspricht, und stellt dies einer weiteren Schaltung 51 zur weiteren Verarbeitung und/oder Auswertung zur Verfügung.

Analog zu dem vorgenannten Ausführungsbeispiel besteht der Wandler hier aus zwei Kondensatoren und die elektrischen Meßgrößen sind deren Kapazitäten.

Die Differenzdruck-Meßzelle ist in ein Gehäuse 53 eingefaßt, das aus zwei Flanschen 55 und einem dazwischen eingespannten zylindrischen Gehäuseabschnitt 57 besteht. Die beiden Flansche 55 weisen jeweils eine kreisförmige Öffnung auf, durch die hindurch der erste Druck P₁ auf die erste Meßmembran 35 und der zweite Druck P₂ auf die zweite Meßmembran 37 einwirkt. Die Flansche 55 liegen mit einem inneren Rand der Öffnungen unter Zwischenfügung einer Dichtung 59, z.B. eines 0-Rings, auf einem äußeren druckunempfindlichen Rand der Meßmembranen 35, 37 auf. Die beiden Flansche 55 sind z.B. durch in Fig. 2 nicht dargestellte Bolzenschrauben gegeneinander geschraubt und spannen so die Dichtungen 59, die Druckmeßzelle und den zylindrischen Gehäuseabschnitt 57 zwischen sich ein.

Erfindungsgemäß weist die Differenzdruck-Meßzelle freie äußere Mantelflächen auf, die mit einer elektrisch leitfähigen Beschichtung 61 versehen sind. In dem gezeigten Ausführungsbeispiel ist die Differenzdruck-Meßzelle kreisscheibenförmig und die Beschichtung 61 ist auf deren zylindrischen äußeren Mantelfläche aufgebracht. Sie weist lediglich Ausnehmungen für eine isolierte elektrische Durchkontaktierung der Gegenelektroden 45, 47 zu der elektronischen Schaltung 49 auf.

Die Elektroden 41, 43 der Differenzdruck-Meßzelle erstrecken sich bis an einem äußeren Rand der Differenzdruck-Meßzelle und stehen entweder direkt oder über die Fügestellen 40 in elektrisch leitender Verbindung zu der Beschichtung 61. Genau wie bei dem vorherigen Ausführungsbeispiel dient die Beschichtung 61 auch hier gleichzeitig als elektrischer Anschluß für die Elektroden 41, 43.

Die Beschichtung 61 bildet zusammen mit den Elektroden 41, 43 einen geschlossenen Faraday-Käfig, in dem die Differenzdruck-Meßzelle eingeschlossen ist.

Die Aufbringung der Beschichtung 61, deren elektrische Anbindung und deren Wirkungsweise erfolgt auf die gleiche Weise wie bei dem in Fig. 1 dargestellten Ausführungsbeispiel und ist daher hier nicht erneut beschrieben.

Bei der dargestellten Einspannung der Differenzdruck-Meßzelle in das Gehäuse 53 besteht keine elektrische Verbindung zwischen der Beschichtung 61 und dem Gehäuse 53. Es kann daher hier auch bei geerdetem Gehäuse 53 auf eine Isolation der Beschichtung 61 verzichtet werden.

## Patentansprüche

1. Druckmeßgerät welches umfaßt:
- ein Gehäuse (21, 53),
- eine Druckmeßzelle,
-- die mindestens eine druckempfindliche Meßmembran (3, 35, 37) aufweist,
--- auf deren Außenseite im Betrieb ein Druck (P, P₁, P2) einwirkt,
-- die einen Wandler zur Umwandlung einer druckabhängigen Auslenkung der Meßmembran (3, 35, 37) in eine elektrische Meßgröße aufweist und
-- die freie äußere Mantelflächen aufweist,
--- die mit einer elektrisch leitfähigen Beschichtung (31, 61) versehen sind, und
- eine elektronische Schaltung (13, 49) zur Umwandlung der elektrischen Meßgröße in ein Meßsignal, wobei
- die Druckmeßzelle eine kapazitive Druckmeßzelle mit einer auf der Innenseite der Meßmembran (3) angeordneten Elektrode (9) ist,
- die Außenseite der Meßmembran keine leitfähige Beschichtung aufweist, und
- die Beschichtung (31) zusammen mit der Elektrode (9) einen geschlossenen Faraday-Käfig bildet, **gekennzeichnet durch** eine entlang der Mantelfläche der Meßzelle verlaufende elektrische Verbindung zwischen der Beschichtung und der Elektrode.

2. Druckmeßgerät nach Anspruch 1, bei dem die elektrisch leitfähige Beschichtung (31, 61) eine aufgesputterte metallische Beschichtung ist.

3. Druckmeßgerät nach Anspruch 1, bei dem die elektrisch leitfähige Beschichtung (31, 61) ein metallischer Lack, insb. ein Carbonleitlack oder ein Silberleitlack ist.

4. Druckmeßgerät nach Anspruch 1, bei dem die elektrisch leitfähige Beschichtung (31, 61) eine Schicht in einer Laminatfolie ist.

5. Druckmeßgerät nach Anspruch 1, bei dem die Elektrode (9) über die Beschichtung (31) mit einem Referenzpotential (U) verbunden ist.

6. Druckmeßgerät welches umfaßt:
- ein Gehäuse (21, 53),
- eine Druckmeßzelle,
-- die mindestens eine druckempfindliche Meßmembran (3, 35, 37) aufweist,
--- auf deren Außenseite im Betrieb ein Druck (P, P₁, P₂) einwirkt,
-- die einen Wandler zur Umwandlung einer druckabhängigen Auslenkung der Meßmembran (3, 35, 37) in eine elektrische Meßgröße aufweist und
-- die freie äußere Mantelflächen aufweist,
--- die mit einer elektrisch leitfähigen Beschichtung (31, 61) versehen sind, und
- eine elektronische Schaltung (13, 49) zur Umwandlung der elektrischen Meßgröße in ein Meßsignal, wobei
- die Druckmeßzelle eine kapazitive Differenzdruck-Meßzelle ist,
-- die zwei Meßmembranen (35, 37) mit auf deren Innenseiten angeordneten Elektroden (41, 43) aufweist,
- die Außenseite der Meßmembranen keine leitfähige Beschichtung aufweist, und
- die Beschichtung (61) zusammen mit den Elektroden (41, 43) einen geschlossenen Faraday-Käfig bildet, **gekennzeichnet durch** jeweils eine entlang der Mantelfläche der Meßzelle verlaufende elektrische Verbindung zwischen der Beschichtung und den Elektroden.

7. Druckmeßgerät nach Anspruch 6, bei dem die Elektroden (41, 43) über die Beschichtung (61) mit einem Referenzpotential (U) verbunden sind.

## Claims

1. A pressure measuring device which comprises:
- a housing (21, 53),
- a pressure measuring cell,
-- which has at least one pressure-sensitive measuring diaphragm (3, 35, 37),
--- on the outer side of which a pressure (P, P₁, P₂) acts during operation,
-- which has a transducer for converting a pressure-dependent deflection of the measuring diaphragm (3, 35, 37) into an electrical measured variable, and
-- which has free outer circumferential surfaces,
--- which are provided with an electrically conductive coating (31, 61), and
- an electronic circuit (13, 49) for converting the electrical measured variable into a measurement signal, wherein
- the pressure measuring cell is a capacitive pressure measuring cell with an electrode (9) arranged on the inside of the measuring diaphragm (3),
- the outside of the measuring diaphragm has no conductive coating, and
- the coating (31) together with the electrode (9) forms a closed Faraday cage, **characterised by** an electrical connection, extending along the circumferential surface of the measuring cell, between the coating and the electrode.

2. A pressure measuring device according to Claim 1, in which the electrically conductive coating (31, 61) is a sputtered-on metallic coating.

3. A pressure measuring device according to Claim 1, in which the electrically conductive coating (31, 61) is a metallic lacquer, particularly a conductive carbon lacquer or a conductive silver lacquer.

4. A pressure measuring device according to Claim 1, in which the electrically conductive coating (31, 61) is a layer in a laminated foil.

5. A pressure measuring device according to Claim 1, in which the electrode (9) is connected via the coating (31) to a reference potential (U).

6. A pressure measuring device, which comprises:
- a housing (21, 53),
- a pressure measuring cell,
-- which has at least one pressure-sensitive measuring diaphragm (3, 35, 37),
--- on the outer side of which a pressure (P, P₁, P₂) acts during operation,
-- which has a transducer for converting a pressure-dependent deflection of the measuring diaphragm (3, 35, 37) into an electrical measured variable, and
-- which has free outer circumferential surfaces,
--- which are provided with an electrically conductive coating (31,61), and
- an electronic circuit (13, 49) for converting the electrical measured variable into a measurement signal, wherein
- the pressure measuring cell is a capacitive differential pressure measuring cell,
- which has two measuring diaphragms (35, 37) with electrodes (41, 43) arranged on the insides thereof,
- the outside of the measuring diaphragms has no conductive coating, and
- the coating (61) together with the electrodes 41, 43) forms a closed Faraday cage, **characterised by** respective electrical connections, extending along the circumferential surface of the measuring cell, between the coating and the electrodes.

7. A pressure measuring device according to Claim 6, in which the electrodes (41, 43) are connected via the coating (61) to a reference potential (U).

## Revendications

1. Appareil de mesure de pression lequel comprend :
- un boîtier (21, 53)
- une cellule de mesure de pression,
-- qui présente au moins une membrane de mesure sensible à la pression (3, 35, 37),
--- sur le côté extérieur de laquelle une pression (P P1, P2) agit pendant le fonctionnement,
-- qui présente un convertisseur pour convertir la déflexion de la membrane de mesure (3, 35, 37) dépendante de la pression et
-- présente les surfaces d'enveloppe libres, extérieures,
--- qui sont pourvues d'un enduit (31, 61) conducteur d'électricité, et
- un circuit (13, 49) électronique pour convertir la grandeur de mesure électrique en un signal de mesure, où
- la cellule de mesure de pression est une cellule de mesure de pression capacitive avec une électrode (9) disposée sur le côté intérieur de la membrane de mesure (3),
- le côté extérieur de la membrane de mesure ne présente pas d'enduit conducteur, et
- l'enduit (31) forme une cage Faraday ensemble avec l'électrode (9), **caractérisée par** une liaison électrique s'étendant le long de la surface d'enveloppe de la cellule de mesure entre l'enduit et l'électrode,

2. Appareil de mesure de pression selon la revendication 1, dans lequel l'enduit (31, 61) conducteur électrique est un enduit métallique appliqué par pulvérisation .

3. Appareil de mesure selon la revendication 1, dans lequel l'enduit (31, 61) conducteur électrique est une laque métallique, notamment un vernis conducteur comportant du carbone ou un vernis conducteur comportant de l'argent.

4. Appareil de mesure de pression selon la revendication 1, dans lequel l'enduit (31, 61) conducteur d'électricité est une couche avec une feuille stratifiée.

5. Appareil de mesure de pression selon la revendication 1, dans lequel l'électrode (9) est reliée via l'enduit (31) au potentiel de référence (U).

6. Appareil de mesure de pression qui comprend :
- un boîtier (21, 53)
- une cellule de mesure de pression,
-- qui présente au moins une membrane de mesure sensible à la pression (3, 35, 37),
--- sur le côté extérieur de laquelle une pression (P P1, P2) est appliquée pendant le fonctionnement ,
-- qui présente un convertisseur pour convertir une déflexion de la membrane de mesure (3, 35, 37) dépendante de la pression et
-- présente les surfaces d'enveloppe libres, extérieures,
--- qui sont pourvues d'un enduit (31, 61) conducteur d'électricité, et
- un circuit (13, 49) électronique pour convertir la grandeur de mesure électrique en un signal de mesure, où
- la cellule de mesure de pression est une cellule de mesure de pression capacitive ,
-- les deux membranes de mesure (35, 37) présentent des électrodes (41, 43) disposées sur leurs côtés internes,
- le côté extérieur des membranes de mesure ne présente pas d'enduit conducteur, et
- l'enduit (61) forme ensemble avec les électrodes (41, 43) une cage Faraday, caractérisée à chaque fois par une liaison électrique s'étendant le long de la surface d'enveloppe de la cellule de mesure entre l'enduit et les électrodes.

7. Appareil de mesure de pression selon la revendication 6, dans lequel les électrodes (41, 43) sont reliées via l'enduit (61) au potentiel de référence (U).
